Europäisches Patentamt

European Patent Office

Office européen des brevets

(19)

(11) Numéro de publication : **0 369 917 B1**

(12) **FASCICULE DE BREVET EUROPEEN**

(45) Date de publication du fascicule du brevet :
**22.02.95 Bulletin 95/08**

(51) Int. Cl.$^6$ : **H04L 5/02, H04J 3/06**

(21) Numéro de dépôt : **89460041.0**

(22) Date de dépôt : **17.11.89**

(54) **Procédé de diffusion de données numériques, notamment pour la radiodiffusion à haut débit vers des mobiles à entrelacements tempsfréquence et synchronisation analogique.**

Demande divisionnaire 93116353.9 déposée le 17/11/89.

(30) Priorité : **18.11.88 FR 8815216**

(43) Date de publication de la demande :
**23.05.90 Bulletin 90/21**

(45) Mention de la délivrance du brevet :
**22.02.95 Bulletin 95/08**

(84) Etats contractants désignés :
**DE ES GB IT NL**

(56) Documents cités :
**WO-A-88/00417**
**FR-A- 1 443 881**
**GB-A- 703 247**
**EBU REVIEW-TECHNICAL, no. 224, août 1987, pages 168-190, Bruxelles, BE; R. Lassalle et al.: "Principles of modulation and channel coding for digital broadcasting for mobile receivers"**
**1987 IEEE Military Communications Conference, vol. 2, 19-22 octobre 1987, Washington, pages 23.4.1 - 23.4.5, IEEE, New York, US; G.L. Stuber: "Soft decision decoding metrics for DS/DPSK receivers"**

(56) Documents cités :
**TELECOMMUNICATIONS, vol. 19, no. 10, octobre 1985, pages 58j,n,p,r, Dedham, Massachusetts, US; H.R. JOHNSON: "PC communications: the revolution is coming"**
**IEE PROCEEDINGS SECTION A-I, vol. 132, no. 5, partie F, août 1985, pages 375-383, Stevenage, Herts, GB; I. SABBAGH et al.: "Adaptive slow frequency-hopping system for land mobile radio"**

(73) Titulaire : **FRANCE TELECOM**
**6, Place d'Alleray**
**F-75015 Paris (FR)**
Titulaire : **Etablissement Public de Télédiffusion dit "Télédiffusion de France"**
**21-27 rue Barbès**
**F-92542 Montrouge Cédex (FR)**

(72) Inventeur : **Pommier, Daniel**
**Le Chant d'Allouettes**
**F-35310 Bréal sur Montfort (FR)**
Inventeur : **Le Floch, Bernard**
**22 rue de la Monnaie**
**F-35000 Rennes (FR)**

(74) Mandataire : **Corlau, Vincent**
**c/o Cabinet Patrice Vidon,**
**Immeuble Germanium,**
**80 avenue des Buttes de Coesmes**
**F-35700 Rennes (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 369 917 B1

## Description

Le domaine de l'invention est celui de la diffusion de données numériques destinées à être reçues notamment par des mobiles circulant en milieu urbain, c'est-à-dire en présence de parasites et de brouillage, et dans des conditions de multipropagation (processus de RAYLEIGH) engendrant un phénomène d'évanouissement (fading).

L'invention s'applique plus particulièrement, mais non exclusivement, au système de radiodiffusion sonore numérique tel que décrit dans les demandes françaises 86 09622 du 2 juillet 1986, et 86 13271 du 23 septembre 1986 au nom des mêmes déposants. Le système de diffusion numérique présenté dans ces demandes de brevet antérieures est basé sur l'utilisation conjointe d'un dispositif de codage de canal, et d'un procédé de modulation par multiplexage de fréquences orthogonales (système COFDM : Coding Orthogonal Frequency Division Multiplex).

Le procédé de modulation proprement dit de ce système connu consiste à assurer la répartition d'éléments numériques constitutifs du signal de données dans l'espace fréquence-temps f-t et à émettre simultanément des jeux d'éléments numériques sur M voies de diffusion parallèles au moyen d'un multiplex de fréquences porteuses orthogonales. Ce type de modulation permet d'éviter que deux éléments successifs du train de données soit émis à la même fréquence. Ceci permet d'absorber la sélectivité fluctuante en fréquence du canal, en dispersant fréquentiellement, pendant la diffusion, les éléments numériques initialement adjacents.

Le processus de codage connu vise pour sa part à permettre de traiter les échantillons issus du démodulateur pour absorber l'effet de variation d'amplitude du signal reçu, dûe au processus de Rayleigh. Le codage est avantageusement un codage convolutif, éventuellement concaténé à un codage du type REED-SOLOMON.

De façon connue, les éléments numériques codés sont de plus entrelacés, tant en temps qu'en fréquence, de façon à maximiser l'indépendance statistique des échantillons vis-à-vis du processus de Rayleigh et du caractère sélectif du canal.

La présente invention a pour objectif de fournir un mode de réalisation optimisé de la structure de trame du signal diffusé, de façon à bénéficier au maximum des propriétés d'auto-synchronisation du procédé COFDM, et de maximiser la résistance du système aux parasites impulsionnels et au brouillage.

Cet objectif ainsi que d'autres qui apparaîtront par la suite sont atteints à l'aide d'un procédé de diffusion de données numériques, notamment pour la radiodiffusion sonore à haut débit vers des mobiles, du type assurant la répartition desdites données sous forme d'éléments numériques dans l'espace fréquence f-temps t et l'émission de trames de symboles constitués chacun d'un multiplex de fréquences porteuses orthogonales modulées par un jeu d'éléments numériques, et diffusées simultanément sur J voies parallèles,

caractérisé en ce que la récupération de synchronisation de chaque trame reçue est réalisée par des moyens de synchronisation analogiques, sans extraction préalable d'horloge.

Selon une caractéristique avantageuse de l'invention, l'entête de chaque trame comporte un intervalle de silence, de la durée d'un symbole numérique de la trame. Ce symbole de silence est susceptible de servir de moyen de synchronisation de la démodulation, et/ou de moyen d'analyse des parasites impulsionnels et du brouillage caractéristiques du canal.

Selon une autre caractéristique avantageuse de l'invention, ladite entête de trame comporte un multiplex non modulé desdites J fréquences porteuses orthogonales, de la durée d'un symbole numérique de la trame. Ce symbole non modulé peut être utilisé comme moyen de synchronisation et/ou comme référence de phase pour les J porteuses modulées en phase du train numérique.

De façon préférentielle, lesdits symboles sont constitués à partir d'une opération d'entrelacement fréquentielle au moyen d'une fonction déterministe réversible, ladite fonction consistant en un procédé de brassage d'indices desdites fréquences, avec maximisation de la dispersion des fréquences associées à des éléments numériques adjacents du signal de données source. Ledit brassage d'indices consiste avantageusement à appliquer une fonction du type à inversion de bit sur lesdits indices codés binaires.

Préférentiellement, la modulation de phase effectuée sur les porteuses est du type à quatre états de phase, chaque porteuse étant modulée par une paire d'éléments numériques, et lesdites paires sont constituées à partir d'une séquence source d'éléments numériques en constituant des paquets de 2J éléments consécutifs dans ladite séquence, et en associant les éléments deux à deux dans chaque paquet selon un critère de maximisation de dispersion des éléments numériques adjacents de la séquence source.

Les paires peuvent aussi être constituées en scindant chacun desdits paquets de données en deux demi-paquets, et en appariant les éléments numériques de même rang dans chaque demi-paquet.

L'entrelacement fréquentiel ainsi défini est avantageusement combiné à un entrelacement temporel réalisé par application de retards dont la valeur est attribuée à chaque élément numérique en appliquation d'une fonction réversible de l'indice de l'élément numérique, la fonction de retard (F) étant telle que le désentrela-

2

cement, dans l'ordre initial, et la récupération de chaque élément de la séquence source sont réalisés par application, à chaque élément numérique de même indice dans la séquence reçue, d'une valeur de retard complémentaire par rapport à la profondeur d'entrelacement maximale de la fonction de retard.

Selon une autre caractéristique de l'invention, le procédé comprend un processus d'extraction de brouillage comprenant les étapes suivantes :

. on analyse le signal reçu pendant ledit symbole de silence, sur le spectre couvert par les J porteuses orthogonales ;

. on repère les fréquences affectées par un bruit gaussien complexe ;

. on effectue un traitement de correction et/ou d'annulation du signal utile reçu par lesdites fréquences brouillées détectées.

De façon avantageuse, ladite analyse spectrale est complétée par une étape de filtrage bidimensionnel dans l'espace temps-fréquence, assurant un lissage des résultats de ladite analyse sur l'étendue utile du spectre analysé.

Selon une caractéristique complémentaire de l'invention, le procédé est du type mettant en oeuvre un codage convolutif des données à l'émetteur, et un décodage à décision douce par maximisation de vraisemblance au récepteur ;

caractérisé en ce que ledit traitement de correction et/ou d'annulation du signal utile reçu pour lesdites fréquences brouillées détectées consiste à informer ladite prise de décision douce au moyen de la puissance de bruit détecté sur chacune desdites fréquences.

D'autres caractéristiques et avantages de l'invention apparaitront à la lecture de la description suivante d'un mode de réalisation donné à titre d'exemple non limitatif, et des dessins annexés dans lesquels :

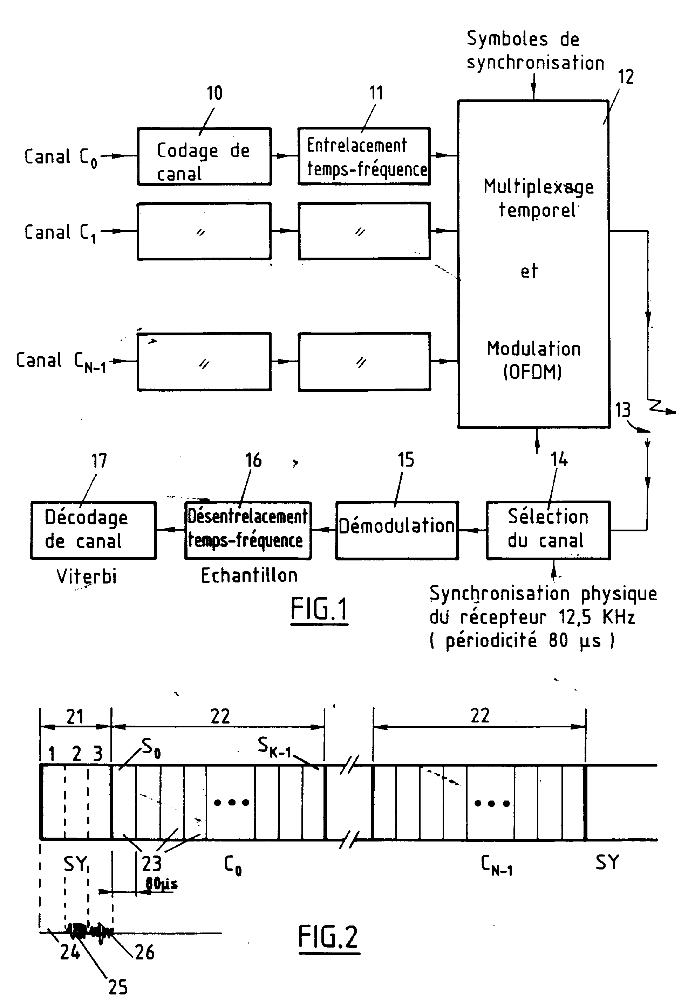

. la figure 1 est un schéma synoptique d'une chaîne d'émission-réception mettant en oeuvre le procédé de l'invention ;

. la figure 2 schématise la structure d'une trame telle que diffusée par le système de l'invention ;

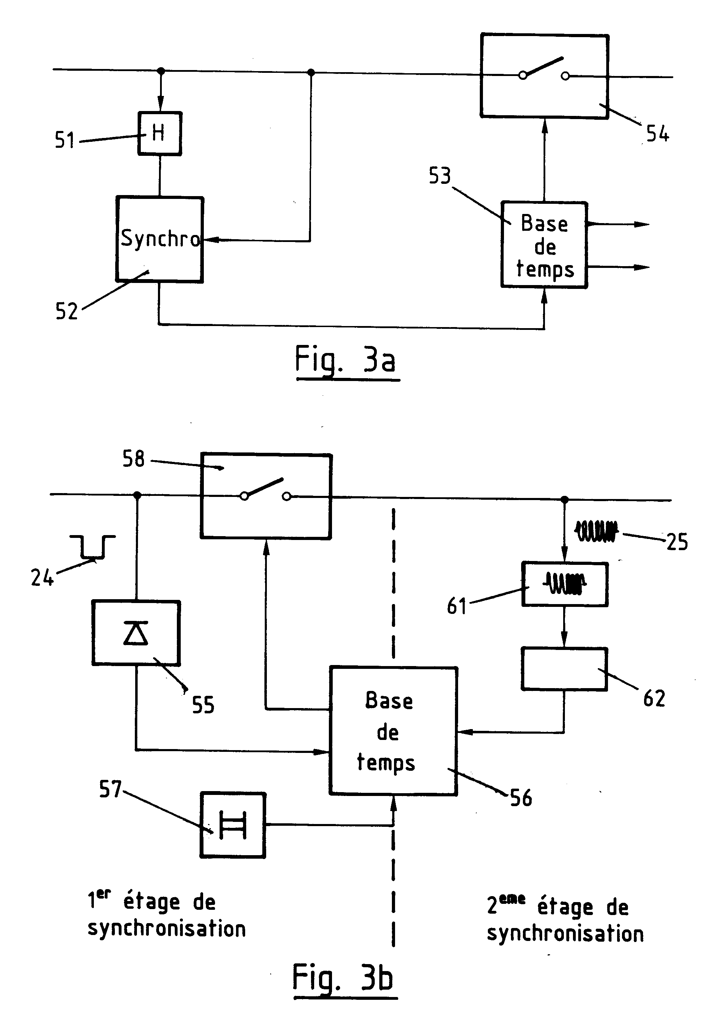

. les figures 3a, 3b schématisent respectivement une chaîne d'acquisition classique de synchronisation par extraction d'horloge d'une part, et le principe de récupération analogique de synchronisation à deux étages suivant l'invention ;

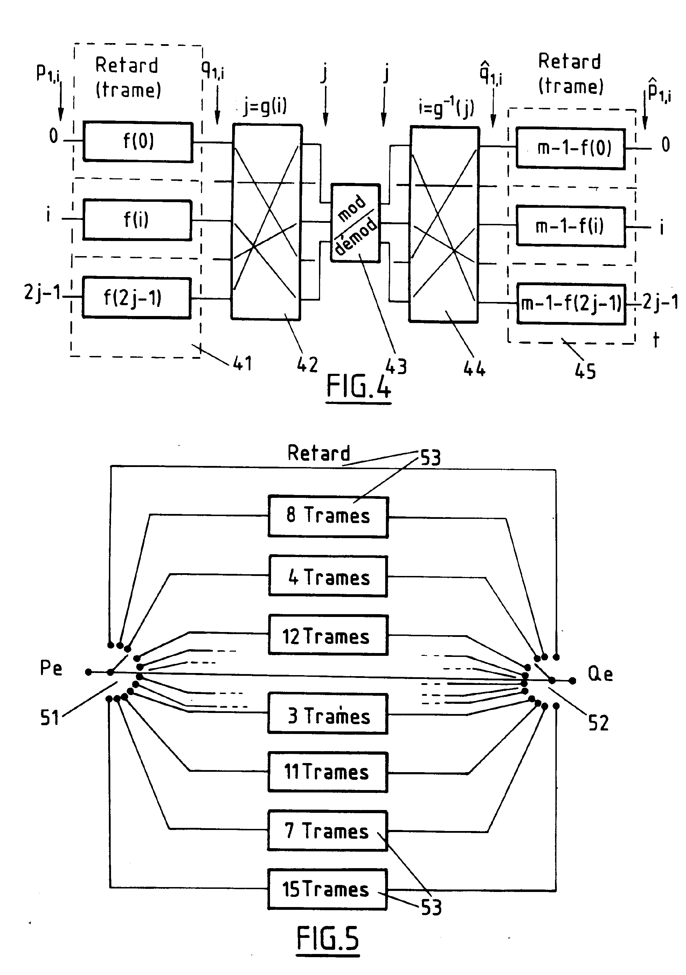

. la figure 4 schématise une chaîne d'entrelacement/désentrelacement temps-fréquence, optimale en coopération avec le principe de synchronisation de l'invention ;

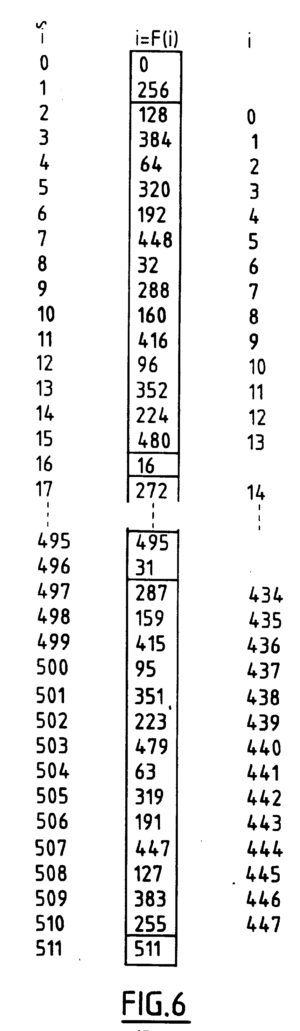

. la figure 5 illustre un mode de réalisation avantageux d'un entrelacement temporel convolutif implantable dans la chaîne de la figure 4 ;

. la figure 6 illustre un mode avantageux d'un brassage d'indices de fréquence, compatible avec l'entrelacement fréquentiel de la chaîne de la figure 4 ;

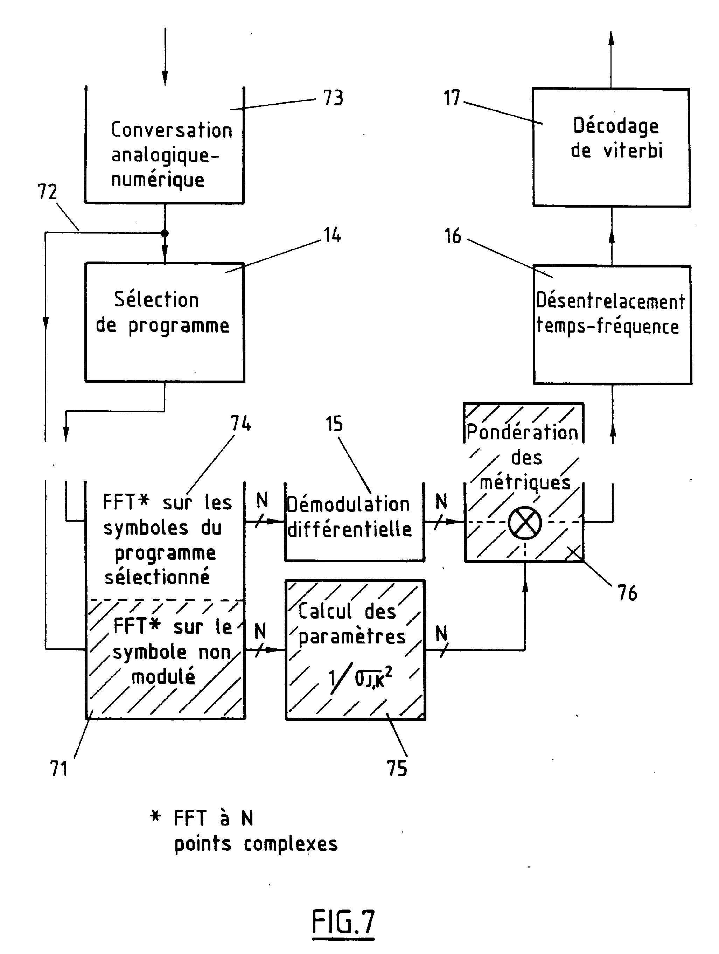

. la figure 7 schématise une chaîne de réception à extraction de brouillage compatible avec le procédé de diffusion numérique à haut débit de l'invention.

Les différents aspects du mode de réalisation qui va être décrit ci-après concernent plus particulièrement la radiodiffusion sonore numérique vers les mobiles, tels que notamment définis dans le programme EUREKA "Digital Audio Broadcasting" (DAB).

Toutefois, il est clair que le principe de diffusion numérique à haut débit de l'invention peut s'appliquer à tout type de communication, notamment dans des canaux soumis au processus de Rayleigh, tel que par exemple les communications aéronefs-satellites et autres.

Dans l'application de radiodiffusion sonore numérique du programme DAB, un objectif peut être par exemple de transmettre seize programmes stéréophoniques dans une bande de fréquence de 8 MHz de largeur, avec un débit numérique de l'ordre de 100 kbits (après compression).

Une chaîne de transmission telle que décrite dans les demandes de brevet mentionnées en préambule est présentée en figure 1.

Chacun des N (16) canaux $C_0$ à $C_{n-1}$ subit en parallèle un codage 10, puis un entrelacement temps-fréquence 11 sur une voie séparée, avant d'être soumis collectivement à un processus 12 de multiplexage temporel et de modulation OFDM.

Le codage 10 est avantageusement du type convolutif. L'entrelacement temps-fréquence 11 a pour objectif de brasser les éléments numériques de chaque canal afin de leur conférer une indépendance maximale vis-à-vis des parasites et du brouillage du canal de diffusion 13.

La modulation OFDM, consiste à moduler des symboles constitués chacun d'un multiplex de fréquences orthogonales diffusées simultanément sur J voies. Cette opération peut être réalisée par une transformation de Fourier sur la séquence numérique codée et entrelacée de chaque canal $C_i$.

A titre d'exemple, dans une bande de fréquence de 8 MHz, on peut définir 512 fréquences porteuses séparées de 15 625 Hz. Parmi celles-ci 448 sont utilisables, après élimination de la fréquence centrale du spectre et des porteuses latérales (1/8e du spectre) pour tenir compte des contraintes de filtrage.

La chaîne de réception comporte les étapes de sélection de canal 14, de démodulation 15, de désentrelacement en fréquence 16 et de décodage 17 du canal désentrelacé.

L'opération 14 de sélection de canal s'effectue avantageusement par transformation de Fourier rapide TFR de façon à décimer le jeu de porteuses adéquatement entrelacées pour n'appliquer l'opération de démodulation OFDM que sur les porteuses du canal sélectionné (voir certificat d'addition 86 13271 déjà cité). Après le désentrelacement temps-fréquence 16, on applique avantageusement un décodage de Viterbi à décision douce 17.

La trame de données telle que diffusée à travers le canal 13 présente selon l'invention la structure de la Fig. 2.

La trame est constituée d'une entête 21, et de N canaux élémentaires 22 notés de $C_0$ à $C_{n-1}$ constitués chacun de K symboles 23, notés $S_0$ à $S_{k-1}$. Chaque symbole 23 est constitué par un multiplex de J porteuses orthogonales. Chaque canal Ci représente un flux de données particulier, indépendant des informations transmises sur les autres canaux.

L'entête 21 de la trame comporte un intervalle "vide" ou "blanc" 24 qui sert avantageusement à la fois pour effectuer une synchronisation analogique de la trame, et pour effectuer une extraction du brouillage du canal de diffusion.

La possibilité de réaliser une récupération analogique de synchronisation, sur un symbole "vide", est une caractéristique fondamentale de l'invention.

En effet, dans les systèmes existants fonctionnant à haut débit et comme représenté en Fig 3a, la récupération de synchronisation est habituellement effectuée en synchronisation au niveau binaire, sur le train reçu, au moyen d'une horloge 51 travaillant avec des moyens de synchronisation 52 à verrouillage. La synchronisation récupérée attaque une base de temps 53 qui ouvre des fenêtres 54 dans le train d'ondes reçues pour en extraire les trames utiles. Ce type de chaîne à verrouillage de synchronisation est imposée par la nécessité de travailler avec une précision très importante, typiquement de l'ordre de $\pm 5$ ns pour des débits de 10 Mbits par seconde.

A débit égal, le procédé de diffusion de l'invention permet de travailler à des précisions considérablement moins importantes lors de la récupération de synchronisation. En effet, du fait que chaque symbole est constitué par un multiplex de J porteuses orthogonales, la synchronisation s'effectue sur des symboles d'une largeur J fois supérieure. Ainsi, dans le cas de l'utilisation de 448 porteuses en parallèle, la précision requise à la récupération de synchronisation est d'environ 4,5 μs.

Le montage de la figure 3b correspond à la mise en oeuvre d'une synchronisation à deux étages par récupération de deux symboles de synchronisation successifs. Le premier symbole de synchronisation est le symbole "blanc" 24 de l'entête 21 de trame. La détection d'enveloppe 55 du symbole "blanc" déclenche la base de temps 56 qui peut être engendrée par un simple oscillateur à quartz 57 à 12.5 kHz, pour des symboles d'une durée de 80μs. La base de temps 56 ouvre des fenêtres 58 dans le train numérique reçu, de façon à récupérer le second symbole de synchronisation 25.

Ce symbole est constitué par un multiplex non modulé des J fréquences porteuses. Il se présente avantageusement sous la forme d'une vobulation sur la totalité du spectre couvert par les porteuses mais peut être constitué par tout multiplex à enveloppe sensiblement constante.

Le deuxième étage de synchronisation a pour objectif de recaler plus précisément la synchronisation acquise au premier étage, par analyse de la réponse impulsionnelle du canal. L'autocorrélation du symbole vobulé 25 permet ainsi d'obtenir une précision accrue en synchronisation. La détection d'enveloppe 61 du second symbole de synchronisation recale, après analyse 62, la base de temps 56, et donc le séquencement des ouvertures de fenêtre 58 dans le train d'ondes reçu. La récupération de ce symbole, d'une durée de 80 μs, s'accomode d'une précision de $\pm 2$ μs, et est donc compatible avec une chaîne de récupération analogique.

L'analyse de la réponse impulsionnelle du canal permet de tenir compte des phénomènes d'écho pour la synchronisation. De plus, un intervalle de garde est avantageusement prévu entre chaque symbole de la trame, en vue d'absorber ces effets d'écho, et de limiter le phénomène d'interférence intersymbole. L'intervalle de garde est typiquement d'une valeur de 16 μs, ramenant la période de symbole utile à 64 μs.

Les symboles de synchronisation 24, 25 de l'entête 21 de la trame peuvent en outre chacun avoir une seconde fonction distincte.

Le symbole blanc 24 peut en effet servir à analyser les parasites et brouillages affectant le canal de transmission, afin d'en tenir compte au récepteur, dans un module de décodage à décision douce comme on le verra plus loin.

Le symbole vobulé de synchronisation peut pour sa part servir de référence de phase pour le décodage des symboles utiles 23 de la trame. En effet, de façon avantageuse, la phase de référence de chacune des J porteuses du multiplex est calée de façon distincte et spécifique, pour pouvoir restituer en démodulation différentielle chaque composante du multiplex au récepteur. Avantageusement, le calage des phases de référe-

rence s'exprime par la formule :

$$\varphi\, k \;=\; \pi k^2/N,$$

avec k = 0 à N : indice de chaque fréquence

N : nombre total de fréquence du multiplex (N = 512 dans l'exemple présenté).

Tout autre mode de calcul des phases de calage convient, pourvu qu'il permette de discriminer l'information acheminée par chacune des porteuses du multiplex.

Le cas échéant, l'entête 21 de la trame comporte un troisième symbole 26 porteur d'informations telles que la liste des fréquences locales d'émissions pour le canal considéré. Un récepteur mobile est alors à même de se caler automatiquement en permanence sur l'émetteur local le plus puissant, au moyen d'un dispositif spécifique d'analyse de cette information.

Au total, le principe de synchronisation analogique et implicite des trames, dans l'invention, permet d'éviter les inconvénients des systèmes existants utilisant des mots de synchronisation reconnus au niveau binaire (consommation de débit, risques de mauvaise reconnaissance du mot, perte totale de la trame en cas d'erreur de synchronisation). Cet avantage déterminant vient se cumuler avec la possibilité optionnelle d'une utilisation bi-fonctionnelle des symboles de synchronisation, comme il vient d'être présenté.

La structure de trame ainsi réalisée résulte d'une double opération d'entrelacement temporel et d'entrelacement fréquentiel de la séquence source (fig. 4).

Le nombre d'éléments binaires par canal d'une même trame se présentant à l'entrée du système d'entrelacement dépend du nombre J de porteuses par symbole, du nombre K de symboles par canal et du nombre d'états de la modulation appliquée à chaque porteuse. Dans le cas d'une modulation à 4 états de phase, la taille des blocs $P_l$ de données se présentant à chaque trame à l'entrée de ce système est de 2.J.K bits (I désignant l'indice de la trame).

A titre d'exemple, si J = 448 et K = 9 (k = 0 à 8 désigne le nombre d'ordre du symbole dans le canal), on obtient des blocs $P_l$ de données valant 8 064 bits.

Soit $P_{l,i}$ le bit d'indice i du bloc $P_l$ (i = 0 à 2 J.K-1)

L'entrelacement temporel consiste à former un bloc $Q_l$ de même taille que le bloc $P_l$, dont le bit d'indice i, noté $q_{l,i}$ est défini de la manière suivante :

$$q_{l,i} \;=\; P_{l\,-\,f(i),i}$$

Du choix de la fonction f(.), dépend la profondeur et l'efficacité de l'entrelacement. De manière générale, l'image de f est l'ensemble F = {O, 1..., m-1}, où m désigne la profondeur temporelle de l'entrelacement.

Un exemple d'entrelacement temporel évolutif est représenté en figure 5. L'exemple présenté est du type appliquant un procédé à inversion de bits défini par la fonction d'entrelacement suivante :

ñ : nombre réciproque associé à n :

si n est un nombre variant de 0 à $2_{p-1}$ s'écrivant sous la forme :

$$n \;=\; \sum_{i=0}^{p-1} \; n_i\, 2^i \qquad n_i \;=\; 0 \text{ ou } 1$$

le nombre ñ associé vaut :

$$\tilde{n} \;=\; \sum_{i=0}^{p-1} \; n_i 2^{p-1-i}$$

Le bloc $P_l$ est entrelacé conformément au schéma de la figure 5 de façon à former un bloc $Q_l$. Le double commutateur 51, 52 symbolise l'application de la fonction d'entrelacement par commutation successive sur chacun des blocs à retard 53. Soit $q_{l-1}$ le ième élément du bloc $Q_l$. On a la relation :

$$q_{l\,-\,1} \;=\; p_{l\,-\,R(l/16),i}$$

La profondeur d'entrelacement est donc de 16 trames.

Bien entendu, cet exemple n'est donné qu'à titre illustratif et non limitatif.

L'affectation des éléments du bloc $Q_l$ aux K symboles du canal considéré dans la trame I se fait de la manière suivante.

Le bloc $Q_l$ est scindé en K paquets de 2J bits selon l'ordre croissant de l'indice i et ces paquets sont affectés aux K symboles du canal considéré, suivant: le principe suivant:

$$(q_{l,0}, ,q_{l,2J-1})(q_{l,2J}, , q_{l,4J-1})\cdots(q_{l,2J(K-1)}, ,q_{l,2JK-1})$$

n° 0          1          K-1
de
symbole

L'entrelacement fréquentiel consiste à affecter les 2J bits de chaque paquet aux J porteuses constituant le symbole associé au paquet considéré. Ces 2J bits sont regroupés en J paires qui sont associées bijectivement aux porteuses du symbole, selon la loi particulière qui définit l'entrelacement.

Un exemple d'entrelacement fréquentiel est illustré en figure 6, dans laquelle :

. i représente l'indice des éléments de la séquence ayant subit l'entrelacement temporel 41, et introduit dans le module d'entrelacement fréquentiel 42;

. $\tilde{\jmath}$ représente l'indice des éléments après entrelacement fréquentiel 42;

. la colonne $\tilde{\jmath}$ = F(i) illustre la mise en oeuvre de la fonction d'entrelacement par inversion de bits sur les indices des 512 fréquences porteuses constituant chaque multiplex.

On notera que chaque symbole élémentaire de modulation est constitué par une juxtaposition de 448 porteuses formant un sous-ensemble de l'ensemble :

$\{f_j = f_o + jDf\}$ (j = 0 à 511) où $f_o$ désigne une fréquence arbitraire et Df l'écart entre chaque porteuse.

Ce sous-ensemble est l'ensemble des porteuses fj, dont l'indice j satisfait à la condition (1) :

$$(1) \qquad 32 \leq j \leq 480, j =/ 256$$

Ce choix est justifié par des contraintes liées à la faisabilité de certaines fonctions analogiques du récepteur. La suppression de la porteuse centrale pallie le problème de la dérive en continu des circuits analogiques numériques, et la suppression des porteuses latérales du spectre (7/8 du spectre total) remédie aux effets de bord des filtres de coupure.

Soit j le i+1 ième nombre satisfaisant à la condition (1) dans la liste des indices de 0 à 511 classés dans leur ordre réciproque croissant. Cette relation définit la fonction j = F(i). L'entrelacement fréquentiel est caractérisé par les relations :

. si E(i/448) est pair $u_{j,k} = q_{l,i}$
. si E(i/448) est impair $v_{j,k} = q_{l,i}$

avec i = 0 à 8 063, k = E(i/896) et j = F(R(i/448)

et avec E(p/q) : partie entière de p/q

R(p/q) : reste de la division de p par q.

Dans ces relations, $(u_{j,k}, v_{j,k})$ désigne le couple d'éléments binaires déterminant la phase de la porteuse fj du symbole d'ordre k. (Chaque porteuse subit une modulation à 4 état de phase).

En d'autres termes, chacun des couples d'éléments binaires est constitué à partir de la séquence source d'éléments numériques en constituant des paquets de 2M d'éléments constitutifs dans ladite séquence, et en associant les éléments deux à deux dans chaque paquet selon un critère de maximisation de dispersion des éléments numériques adjacents de la séquence source. Les couples d'éléments numériques sont constitués en scindant chacun des paquets de données en deux demi-paquets et en appariant les éléments numériques de même rang dans chaque demi-paquet.

Une caractéristique essentielle est que pourvu que les fonctions F d'entrelacement temporel et G d'entrelacement fréquentiel soient convenablement choisies l'une par rapport à l'autre, l'opération de désentrelacement s'effectue de façon implicite par application de la fonction combinée $(GoF)^{-1}$. Ceci résulte d'une part de la simplicité de synchronisation décrite plus haut, qui permet d'obtenir implicitement la séquence reçue du canal de transmission 43 avec une connaissance immédiate de l'indice des symboles dans la séquence, et d'autre part de la complémentarité des deux fonctions d'entrelacements temporel et fréquentiel.

La reconstitution des blocs $Q_l$ se fait alors très simplement dans le module de désentrelacement en utilisant le caractère bijectif de l'entrelacement fréquentiel. Le récepteur utilisant une démodulation différentielle, les données sont restituées sans problème d'ambiguïté de phase.

Le principe du désentrelacement temporel 45 consiste à appliquer aux éléments binaires de chaque bloc $Q_l$ le retard complémentaire par rapport à la profondeur de l'entrelacement du retard subit à l'émission. La connaissance de ce retard complémentaire s'exprime par m-f(i)-1, et se déduit directement de l'indice i de l'élément binaire et de la connaissance a priori de la fonction f(.). Aucune synchronisation autre que celle du multiplex lui-même n'est nécessaire pour effectuer le désentrelacement.

Le diagramme de la figure 4 présente ce mécanisme pour un seul symbole de modulation.

Dans le cas où le décodeur de canal fonctionne en décision douce, le désentrelacement s'applique en réalité non pas sur des éléments binaires, mais sur des mots (généralement de 4 bits) représentant l'estimation par le démodulateur des bits reçus.

Comme mentionné plus haut, le symbole blanc 24 de l'entête 21 de trame peut être utilisé pour identifier et caractériser le brouillage du canal de transmission, et en tenir compte dans la restitution du signal reçu notamment au sein d'un processus de décodage en décision douce.

La figure 7 représente la branche réception du système de transmission de l'invention, dont les modules hachurés illustrent la mise en oeuvre de cette fonction supplémentaire de prise en compte du brouillage par rapport à la chaîne de réception connue de la figure 1.

L'explication de la figure 7 passe d'abord par un rappel des caractéristiques principales du signal transmis, dans le cas général.

Le signal émis est constitué par une suite de symboles de modulation formant un multiplex de N porteuses orthogonales.

Soit $f_k$ l'ensemble des fréquences porteuses considérées avec :

$$f_k = f_o + k/Ts, k = 0 \text{ à } N - 1$$

où $T_s$ représente la durée allouée à un symbole de modulation.

On définit alors une base orthogonale de signaux élémentaires $\psi_{j,k}(t)$ avec k = 0 à N - 1, j = $-\infty$ à $+\infty$ :

$$\psi_{j,k}(t) = g_k(t - jT_s)$$

avec

$$0 \leq t < T_s : g_k(t) = e^{2i\pi f_k t}$$

ailleurs :

$$g_k(t) = 0$$

Soit alors un ensemble de nombres complexes $C_{j,k}$ prenant ses valeurs dans un alphabet fini, et représentant le signal de données émis.

Le signal OFDM associé s'écrit :

$$x(t) = \sum_{ji-\infty}^{+\infty} \sum_{k=0}^{N-1} C_{j,k} \, \psi_{j,k}(t)$$

Dans le cas qui concerne cette application et en cohérence avec les développements descriptifs précédents, les symboles émis $C_{j,k}$ sont de module constant, ce qui signifie en d'autres termes que chacune des porteuses du multiplex subit une modulation de phase.

On peut modéliser le canal de transmission suivant la relation

$$Y_{j,k} = H_{j,k}C_{j,k} + N_{j,k}$$

où $H_{j,k}$ est la réponse complexe du canal au point (j,k) de l'espace temps-fréquence, et $N_{j,k}$ est un bruit gaussien complexe avec :

$$N_{j,k} = N_{Ij,k} + iN_{Qj,k}$$

et

$$E(N_{Ij,k})^2 = E(N_{Qj,k})^2 = \sigma^2_{j,k}$$

où E( ) représente l'espérance mathématique.

On peut alors montrer que la mise en oeuvre d'un décodage selon un critère de maximum de vraisemblance a posteriori consiste à maximiser sur $C_{j,k}$, sous la contrainte du code de liaison des symboles $C_{j,k}$, l'expression

$$Re(Y_{j,k} H^*_{j,k} C^*_{j,k}/\sigma^2_{j,k})$$

où Re(.) représente la partie réelle d'un nombre complexe.

L'élément essentiel de cette analyse porte sur le fait que la puissance de bruit $\sigma^2_{j,k}$ en tout point (j,k) de l'espace temps-fréquence intervient dans le processus de décodage. Lorsque le code liant les éléments $C_{j,k}$ est un code convolutif et que le décodeur utilisé est un décodeur de Viterbi en décision douce, la connaissance de la puissance de bruit générée par le canal et par le dispositif de réception constitue donc un paramètre de pondération important vis-à-vis de l'optimisation du décodage. Ce paramètre n'intervient pas dans le cas particulier d'un bruit blanc, tel que

$$\sigma^2_{j,k} = \sigma^2,$$

quels que soient j et k.

Toutefois, si un brouilleur affecte le signal, la pondération a pour effet "d'effacer" de manière plus ou moins importante les porteuses correspondantes, de la même façon qu'un évanouissement sur ces mêmes porteuses. Cette propriété est une spécificité du système COFDM, qui le rend extrêmement attrayant dans des ca-

7

EP 0 369 917 B1

naux fortement perturbés par des bruits ou parasites industriels, de nature éventuellement impulsive ou recurrente en fréquence (domaine localisé de l'espace temps-fréquence).

La mise en oeuvre de ce processus de mesure et d'identification du brouillage, puis de pondération des coefficients de ressemblance consiste à réaliser une analyse spectrale du bruit sur le symbole vide 21.

Cette analyse est réalisée grâce à une transformée de Fourier discrète 71 à partir du signal numérisé 72 obtenu en sortie d'un CAN 73.

Si $\{f_k\}_{k=0,...,N-1}$ désigne l'ensemble des porteuses utilisées dans le signal COFDM, il paraît nécessaire d'effectuer l'analyse du bruit sur un peigne de raies spectrales dont $\{f_k\}$ constitue un sous-ensemble. Comme d'autre part une transformée de Fourier est utilisée pour la démodulation du signal proprement dit, l'utilisation de la même transformée pour l'analyse spectrale 71 du bruit constitue une solution technique parfaitement adaptée au problème et qui ne nécessite la mise en oeuvre d'aucune fonctionnalité supplémentaire.

Cette opération doit être complétée par un filtrage bidirectionnel dans l'espace temps-fréquence, dont le rôle est d'assurer un lissage de cette mesure, afin d'obtenir une estimation de la valeur moyenne du paramètre de pondération.

Le calcul du paramètre $1/\sigma^2_{j,k}$ (75), fournit une information complémentaire de pondération des métriques 76 associées au symbole démodulé et destinées à être utilisées dans l'étape 17 de décodage à décision douce (décodage de Viterbi).

## Revendications

1. Procédé de diffusion de données numériques, notamment pour la radiodiffusion sonore à haut débit vers des mobiles, du type assurant la répartition desdites données sous forme d'éléments numériques dans l'espace fréquence f-temps t et l'émission de trames de symboles constitués chacun d'un multiplex de fréquences porteuses orthogonales modulées par un jeu d'éléments numériques et diffusées simultanément sur J voies parallèles,
   caractérisé en ce que chacune desdites trames de symboles comprend une en-tête (21) comportant un premier symbole (24) de synchronisation analogique constitué par un intervalle de silence de la durée d'un symbole numérique de la trame.

2. Procédé selon la revendication 1 caractérisé en ce que ladite en-tête de trame (21) comporte un second symbole (25) de synchronisation analogique, constitué par un multiplex non modulé desdites J fréquences porteuses orthogonales, de la durée d'un symbole numérique de la trame.

3. Procédé selon la revendication 2, dans lequel lesdites fréquences porteuses orthogonales sont modulées en phase,
   caractérisé en ce que lesdites fréquences porteuses sont calées chacune sur une phase de référence distincte, de façon que leur multiplexage forme une vobulation sur la totalité du spectre couvert par les J porteuses,
   et en ce que ledit second symbole analogique (25) constitué du multiplex de porteuses non modulées fournit une référence de phase pour la démodulation différentielle des symboles suivants (23) du train numérique, à la réception.

4. Procédé de réception de données numériques diffusées selon le procédé de l'une quelconque des revendications 1 à 3,
   caractérisé en ce que la récupération de synchronisation de chaque trame reçue est réalisée par des moyens de synchronisation analogiques, sans extraction préalable d'horloge.

5. Procédé selon la revendication 4 caractérisé en ce qu'il comprend une étape de synchronisation, dans laquelle la détection (55) de l'enveloppe dudit premier symbole (24) de synchronisation analogique entraine le déclenchement d'une base de temps (56).

6. Procédé selon la revendication 5, du type assurant la réception de données diffusées selon le procédé de l'une quelconque des revendications 2 ou 3, caractérisé en ce qu'il comprend une seconde étape de synchronisation, dans laquelle l'analyse (62) dudit second symbole (25) de synchronisation analogique assure le recalage de ladite base de temps (56).

7. Procédé selon l'une quelconque des revendications 4 à 6, du type fonctionnant à travers un canal affecté de bruit gaussien complexe,

8

caractérisé en ce qu'il comporte un processus d'extraction de brouillage comprenant les étapes suivantes :

. analyse spectrale du signal reçu pendant ledit premier symbole (24) de synchronisation analogique constitué par un intervalle de silence, sur le spectre couvert par les M fréquences porteuses orthogonales ;

. détection des fréquences affectées par ledit bruit gaussien complexe ;

. traitement de correction et/ou d'annulation du signal utile reçu par les fréquences affectées détectées.

8. Procédé selon la revendication 7 caractérisé en ce que ladite analyse spectrale est complétée par une étape de filtrage bidimensionnel dans l'espace temps-fréquence, assurant un lissage des résultats de ladite analyse sur l'étendue utile du spectre analysé.

9. Procédé selon la revendication 7 ou 8, du type mettant en oeuvre un décodage à décision douce par maximisation de vraisemblance de données codées selon un codage convolutif à l'émetteur,
caractérisé en ce que ledit traitement de correction et/ou d'annulation du signal utile reçu pour lesdites fréquences affectées détectées consiste à informer ladite prise de décision douce au moyen de la puissance de bruit détectée sur chacune desdites fréquences.

10. Procédé selon l'une quelconque des revendications 7 à 9 caractérisé en ce que ladite analyse spectrale est réalisée par transformation de Fourier discrète sur le signal reçu.

11. Procédé selon l'une quelconque des revendications 1 à 10 caractérisé en ce qu'on ménage un intervalle de garde entre chacun desdits symboles de la trame, à l'émission.

## Patentansprüche

1. Verfahren zum Aussenden von digitalen Daten, insbesondere für Höhrfunksendungen mit hohem Datenfluß zu mobilen Stationen, welches die Verteilung der Daten in Form digitaler Elemente im Frequenz f - Zeit t - Raum sowie das Senden von Symbolfolgen sicherstellt, von denen jedes aus einem Multiplex orthogonaler Trägerfrequenzen besteht, die durch einen Satz digitaler Elemente moduliert werden und gleichzeitig über J parallele Kanäle gesendet werden,
dadurch gekennzeichnet, daß jede der Symbolfolgen einen Kopfabschnitt (21) hat, der ein erstes Symbol (24) für die analoge Synchronisierung umfaßt, bestehend aus einem Leerintervall von der Dauer eines digitalen Symbols der Folge.

2. Verfahren gemäß Anspruch 1,
dadurch gekennzeichnet, daß der Kopfabschnitt (21) der Folge ein zweites Symbol (25) für die analoge Synchronisierung umfaßt, bestehend aus einem nicht modulierten Multiplex der besagten J othogonalen Trägerfrequenzen von der Dauer eines digitalen Symbols der Folge.

3. Verfahren gemäß Anspruch 2, bei welchem die orthogonalen Trägerfrequenzen phasenmoduliert sind,
dadurch gekennzeichnet, daß die Trägerfrequenzen jeweils auf eine unterschiedliche Referenzphase festgelegt sind, so daß ihre Multiplexierung ein Wobbeln durch das von den J Trägerfrequenzen abgedeckte gesamte Spektrum darstellt,
und, daß das zweite analoge Symbol (25), bestehend aus dem Mutliplex der nicht modulierten Trägerfrequenzen, eine Phasenreferenz für die differentielle Demodulierung der nachfolgenden Symbole (23) der digitalen Signalfolge beim Empfang bereitstellt.

4. Verfahren für den Empfang digitaler Daten, die gemäß des Verfahrens aus einem der Ansprüche 1 bis 3 gesendet werden,
dadurch gekennzeichnet, daß das Wiedererlangen der Synchronisierung eines jeden empfangenen Symbolfolge durch analoge Synchronisierungsmittel verwirklicht wird, ohne vorausgehende Extraktion eines Taktsignals.

5. Verfahren gemäß Anspruch 4,
dadurch gekennzeichnet, daß es einen Synchronisierungsschritt enthält, wobei die Erfassung (55) der Einhüllenden des ersten analogen Synchronisierungssymbols (24) die Auslösung einer Zeitbasis (56) verursacht.

6. Verfahren gemäß Anspruch 5, zum Empfang von Daten, die gemäß dem Verfahren nach einem der Ansprüche 2 oder 3 gesendet werden,
dadurch gekennzeichnet, daß es einen zweiten Synchronisierungsschritt umfaßt, wobei die Analyse (62) des zweiten analogen Synchronisierungssym bols (25) das Wiederfestlegen der Zeitbasis (56) sicherstellt.

7. Verfahren gemäß einem der Ansprüche 4 bis 6, das über einen Kanal betrieben wird, der mit einem komplexen gauss'schen Rauschen behaftet ist,
dadurch gekennzeichnet, das es ein Verfahren für das Extrahieren des Rauschens umfaßt, welches die folgenden Schritte umfaßt:
- Spektralanalyse des Signals, das während des ersten, aus einem Leerintervall bestehenden, analogen Synchronisierungssymbols (24) empfangen wird, über das von den M orthogonalen Trägerfrequenzen abgedeckte Spektrum;
- Erfassung der mit dem komplexen gauss'schen Rauschen behafteten Frequenzen;
- Korrektur und/oder Annulierung des durch die betroffenen erfaßten Frequenzen empfangenen Nutzsignals.

8. Verfahren gemäß Anspruch 7,
dadurch gekennzeichnet, daß die Spektralanalyse durch einen zweidimensionalen Filterungsschritt im Zeit-Frequenz-Raum vervollständigt wird, wodurch eine Glättung der Ergebnisse der Analyse über den Nutzbereich des analysierten Spektrums sichergestellt wird.

9. Verfahren nach einem der Ansprüche 7 oder 8 bei dem zur Dekodierung durch eine rauscharme Auswahl zur Maximierung der Wahrscheinlichkeit solche codierten Daten verwendet werden, die beim Sender gefaltet wurden,
dadurch gekennzeichnet, daß die Korrektur und/oder Annulierung des empfangenen Nutzsignals für die betroffenen erfaßten Frequenzen darin besteht, daß für jede dieser Frequenzen die getroffene rauscharme Auswahl über die mittlere erfaßte Rauschleistung informiert wird.

10. Verfahren gemäß einem der Verfahren 7 bis 9,
dadurch gekennzeichnet, daß die Spektralanalyse durch diskrete Fouriertransformation des empfangenen Signals durchgeführt wird.

11. Verfahren gemäß einem der Verfahren 1 bis 10,
dadurch gekennzeichnet, daß man beim Senden ein Schutzintervall zwischen jedem der Symbole der Symbolfolge einfügt.


## Claims

1. Method of broadcasting digital data, especially for high-throughput sound radio broadcasting to mobile units, of the type providing for the distributing of the said data in the form of digital elements within the frequency f/time t space and the transmitting of frames of symbols each consisting of a multiplex of orthogonal carrier frequencies modulated by a set of digital elements and broadcast simultaneously on J parallel channels,
characterized in that each of the said frames of symbols comprises a header (21) containing a first analogue synchronization symbol (24) consisting of an interval of silence with the duration of one digital symbol of the frame.

2. Method according to Claim 1, characterized in that the said frame header (21) contains a second analogue synchronization symbol (25) consisting of an unmodulated multiplex of the said J orthogonal carrier frequencies, with the duration of one digital symbol of the frame.

3. Method according to Claim 2, in which the said orthogonal carrier frequencies are phase-modulated,
characterized in that the said carrier frequencies are each locked onto a distinct reference phase so that their multiplexing forms a wobbulation over the entire spectrum covered by the J carriers,
and in that the said second analogue symbol (25) consisting of the multiplex of unmodulated car-

EP 0 369 917 B1

riers provides a phase reference for the differential demodulation of the succeeding symbols (23) of the digital train, on reception.

4. Method of receiving digital data broadcast according to the method of any one of Claims 1 to 3, characterized in that the recovering of synchronization of each frame received is carried out by analogue synchronization means, without prior clock extraction.

5. Method according to Claim 4, characterized in that it comprises a synchronization step in which detection (55) of the envelope of the said first analogue synchronization symbol (24) induces the triggering of a time base (56).

6. Method according to Claim 5, of the type providing for the receiving of data broadcast according to the method of any one of Claims 2 or 3, characterized in that it comprises a second synchronization step, in which analysis (62) of the said second analogue synchronization symbol (25) provides for the realigning of the said time base (56).

7. Method according to any one of Claims 4 to 6, of the type operating through a channel affected by complex Gaussian noise, characterized in that it includes a jamming extraction process comprising the following steps:
   - spectral analysis of the signal received during the said first analogue synchronization symbol (24) consisting of an interval of silence, over the spectrum covered by the M orthogonal carrier frequencies;
   - detection of the frequencies affected by the said complex Gaussian noise;
   - processing for correcting and/or cancelling the useful signal received through the detected affected frequencies.

8. Method according to Claim 7, characterized in that the said spectral analysis is supplemented with a step of two-dimensional filtering in the time/frequency space, achieving a smoothing of the results of the said analysis over the useful extent of the analysed spectrum.

9. Method according to Claim 7 or 8, of the type employing soft-decision decoding by likelihood maximization of data encoded according to a convolutive encoding at the transmitter, characterized in that the said processing for correcting and/or cancelling the useful signal received in respect of the said detected affected frequencies consists in informing the said soft-decision taking by means of the noise power detected on each of the said frequencies.

10. Method according to any one of Claims 7 to 9, characterized in that the said spectral analysis is carried out by discrete Fourier transformation on the signal received.

11. Method according to any one of Claims 1 to 10, characterized in that a guard interval is allowed for between each of the said symbols of the frame, on transmission.

Symboles de
synchronisation

Canal C₀ → [ 10 Codage de canal ] → [ 11 Entrelacement temps-fréquence ] →

Canal C₁ → [ // ] → [ // ] →

Canal C_{N-1} → [ // ] → [ // ] →

[ 12 Multiplexage temporel et Modulation (OFDM) ] → 13

[ 17 Décodage de canal ] ← [ 16 Désentrelacement temps-fréquence ] ← [ 15 Démodulation ] ← [ 14 Sélection du canal ]

Viterbi          Echantillon

## FIG.1

Synchronisation physique
du récepteur 12,5 KHz
( périodicité 80 μs )

21 | 22 | 22

1 2 3 | S₀ ......... S_{K-1} | ......... 

SY | 23 | C₀ | C_{N-1} | SY

80μs

24 26
25

## FIG.2

51 [H]

Synchro

52

Base
de
temps

53

54

## Fig. 3a

58

24

[Δ]

55

57 [H]

Base
de
temps

56

61

25

62

1er étage de
synchronisation

2eme étage de
synchronisation

## Fig. 3b

FIG.4

FIG.5

| i | i=F(i) | i |
|---|--------|---|
| 0 | 0 | |
| 1 | 256 | |
| 2 | 128 | 0 |
| 3 | 384 | 1 |
| 4 | 64 | 2 |
| 5 | 320 | 3 |
| 6 | 192 | 4 |
| 7 | 448 | 5 |
| 8 | 32 | 6 |
| 9 | 288 | 7 |
| 10 | 160 | 8 |
| 11 | 416 | 9 |
| 12 | 96 | 10 |
| 13 | 352 | 11 |
| 14 | 224 | 12 |
| 15 | 480 | 13 |
| 16 | 16 | |
| 17 | 272 | 14 |
| ⋮ | ⋮ | ⋮ |
| 495 | 495 | |
| 496 | 31 | |
| 497 | 287 | 434 |
| 498 | 159 | 435 |
| 499 | 415 | 436 |
| 500 | 95 | 437 |
| 501 | 351 | 438 |
| 502 | 223 | 439 |
| 503 | 479 | 440 |
| 504 | 63 | 441 |
| 505 | 319 | 442 |
| 506 | 191 | 443 |
| 507 | 447 | 444 |
| 508 | 127 | 445 |
| 509 | 383 | 446 |
| 510 | 255 | 447 |
| 511 | 511 | |

FIG.6

Conversation
analogiquenumérique — 73

Décodage
de viterbi — 17

Sélection
de programme — 14

Désentrelacement
temps-fréquence — 16

72

74

15

Pondération
des
métriques

FFT* sur les
symboles du
programme
sélectionné

N
Démodulation
différentielle

N

⊗

76

FFT* sur le
symbole non
modulé

N
Calcul des
paramètres

$1/\overline{\sigma_{J,K}}^2$

N

71

75

\* FFT à N
points complexes

FIG.7